# EUROPÄISCHE PATENTSCHRIFT

(11) **EP 1 875 107 B1**
(45) Veröffentlichungstag und Bekanntmachung des Hinweises auf die Patenterteilung: **15.07.2009**
(21) Anmeldenummer: 06706600.1
(22) Anmeldetag: 03.02.2006
(51) Int. Cl.: F16H 7/18

(54) **ZUGMITTELTRIEB MIT ZUMINDEST EINER SCHIENE ZUM SPANNEN UND/ODER FÜHREN EINES ENDLOSEN ZUGMITTELS**
FLEXIBLE DRIVE COMPRISING AT LEAST ONE GUIDE FOR TENSIONING AND/OR GUIDING A CONTINUOUS TRACTION MECHANISM
MECANISME A MOYEN DE TRACTION COMPORTANT AU MOINS UN RAIL SERVANT A TENDRE ET/OU GUIDER UN MOYEN DE TRACTION SANS

(30) Priorität: 22.04.2005 DE 102005018901
(43) Veröffentlichungstag der Anmeldung: 09.01.2008
(73) Patentinhaber: Schaeffler KG, 91074 Herzogenaurach (DE)
(72) Erfinder: FRANKE, Günther, 91097 Oberreichenbach (DE); PROSCH, Gerhard, 91315 Höchstadt (DE); SCHUSEIL, Bolko, 91325 Adelsdorf (DE); ULLEIN, Thomas, 96158 Frensdorf (DE); KOCH, Reinhard, 96193 Wachenroth (DE); ASSEL, Martin, 91593 Burgbernheim (DE)
(86) Internationale Anmeldenummer: PCT/EP2006/000931
(87) Internationale Veröffentlichungsnummer: WO 2006/114141

(56) Entgegenhaltungen:
- EP-A- 0 867 639
- DE-A1- 10 301 427
- US-A1- 2003 064 843
- PATENT ABSTRACTS OF JAPAN Bd. 1999, Nr. 12, 29. Oktober 1999 (1999-10-29) -& JP 11 201246 A (DAIDO KOGYO CO LTD), 27. Juli 1999 (1999-07-27)

## Beschreibung

### Gebiet der Erfindung

Die Erfindung betrifft einen Zugmitteltrieb mit mindestens einer Schiene zum Spannen und/oder Führen eines endlosen Zugmittels, insbesondere für eine Kette des Steuertriebs eines Verbrennungsmotors, entsprechend dem Oberbegriff des Anspruchs 1.

### Hintergrund der Erfindung

In der gattungsgemäßen US 6,796,917 B2 ist ein Zugmitteltrieb offenbart, der mindestens eine Schiene aufweist, die zum Spannen oder. Führen eines endlosen Zugmittels dient, insbesondere einer Kette des Steuertriebs eines Verbrennungsmotors, wobei die Schiene, die aus Kunststoff- und Metalleinlagen besteht, einen Doppel-T-Querschnitt mit einem Obergurt und einem Untergurt aufweist, die durch einen mittigen Steg und durch auf dessen beiden Seiten senkrecht stehende Rippen verbunden sind.

### Aufgabe der Erfindung

Der Erfindung liegt die Aufgabe zugrunde, einen Zugmitteltrieb nach dem Oberbegriff des Patentanspruchs 1 zu schaffen, dessen Schiene gegenüber dem Stand der Technik steifer, kompakter und kostengünstiger ist.

### Zusammenfassung der Erfindung

Die Aufgabe wird gelöst durch die Merkmale des unabhängigen Patentanspruchs 1.

Durch die zwei aus Metall - vorzugsweise Stahl - bestehenden Seitenplatten, die in passende Vertiefungen der Rippen beider Seiten des Stegs vorzugsweise spielfrei eingelassen sind, wird der niedrige Elastizitätsmodul und damit die Steifheit und Kompaktheit der Schienen erhöht. Durch die formschlüssigen Befestigungsmittel werden die Seitenplatten auf einfache und kostengünstige Weise gegen Herausfallen gesichert.

Die Seitenplatten können auch zwischen den Innenseiten von Ober- und Untergurt vorteilhaft spielfrei eingelassen sein und auf der gesamten Seitenfläche der Rippen aufliegen.

Als einfache Befestigungsmittel bieten sich sogenannte Schnapphaken bzw. Schnapphakenumgriffe an, die mit der Schiene einstückig ausgebildet sind und mit dieser in einem Arbeitsgang hergestellt werden. Die Elastizität des Kunststoffs erlaubt eine einfache Gestaltung der Schnapphaken, da diese beim Einlegen der Seitenplatten in die Vertiefungen elastisch nachgeben und nach deren Einlegen in eine Ausgangs- und Sperrposition zurückfedern.

Von Vorteil ist auch, dass ein Fixier- und Lagerelement, z. B. eine Schraube oder ein Stift, die zur Befestigung und Lagerung der Schiene am Verbrennungsmotor vorgesehen sind, als zusätzliches Befestigungsmittel für entsprechend gestaltete und mit einer passenden Bohrung versehene Seitenplatten dient. Dadurch ist die Befestigung der Seitenplatten ohne höheren Fertigungs- und Montageaufwand verbessert.

Eine vereinfachte Fertigung und Montage wird dadurch erreicht, dass beide Seitenplatten als zusätzliches Befestigungsmittel zumindest einen Bügel aufweisen, durch den dieselben an einer beliebigen Stelle miteinander verbunden und als einstückiges Biegeteil ausgebildet sind.

Eine vorteilhafte Weiterentwicklung der Erfindung besteht darin, dass als Befestigungsmittel erste und/oder zweite Hinterschneidungen einer Schiene dienen, hinter die ein entsprechendes Teil einer ersten und/oder zweiten verschiebbaren Seitenplatte einschiebbar sind. Dabei sind zwei Alternativen vorgesehen:

Die ersten Hinterschneidungen der Schiene ragen in die Kontur der ersten verschiebbaren Seitenplatten hinein. Zur Montage dieser Seitenplatten sind an deren den ersten Hinterschneidungen zugewandten Seitenplattenrand passende Aussparungen für die ersten Hinterschneidungen vorgesehen.

Die zweiten Hinterschneidungen der Schiene sind außerhalb der Kontur der zweiten verschiebbaren Seitenplatten angeordnet. Zu der Montage weist der den zweiten Hinterschneidungen zugewandte Seitenplattenrand der zweiten verschiebbaren Seitenplatten passende Überstände und den erforderlichen Freiraum zu deren Einschieben in die zweiten Hinterschneidungen auf.

Eine besonders einfache Lösung der Befestigung der Seitenplatten besteht darin, dass diese bei der Fertigung einer Schiene zumindest teilweise mit Kunststoff umspritzt werden.

Eine besonders stabile Befestigung der Seitenplatten liegt vor, wenn die Seitenplatten an den Enden einer Schiene und in dazwischenliegenden Durchbrüchen derselben durch z. B. Schweißen oder Nieten miteinander und dadurch auch mit der Schiene fest verbunden sind.

Eine weitere Befestigungsmöglichkeit von Seitenplatten besteht darin, dass diese zumindest ein Z- oder U-förmiges Ende aufweisen und dass das Z-förmige Ende in eine Öffnung einer Schiene formschlüssig eingreift und das U-förmige Ende in einer anderen Öffnung einer Schiene dieselbe formschlüssig umschließt.

### Kurze Beschreibung der Zeichnung

Weitere Merkmale der Erfindung ergeben sich aus der folgenden Beschreibung und den Zeichnungen, in denen Ausführungsbeispiele der Erfindung schematisch dargestellt sind.

Dabei zeigen:
- Figur 1: eine perspektivische Explosionsdarstellung einer Schiene mit zwei Seitenplatten;
- Figur 1a: eine perspektivische Darstellung der Schiene gemäß Figur 1, jedoch mit montierten Seitenplatten;
- Figur 1b: eine Seitenansicht der Schiene gemäß Figur 1a;
- Figur 1c: einen Querschnitt A-A durch die Schiene gemäß Figur 1b;
- Figur 1d: einen Querschnitt B-B durch die Schiene gemäß Figur 1b;
- Figur 2: eine perspektivische Explosionsdarstellung einer Schiene nach Figur 1, jedoch mit modifizierten Seitenplatten;
- Figur 3: eine perspektivische Darstellung der Schiene gemäß Figur 1 und von zwei durch einen Bügel verbundenen Seitenplatten;
- Figur 4: eine Seitenansicht eines Details einer Schiene mit einer verschiebbaren Seitenplatte und einer ersten Hinterschneidung;
- Figur 5: eine Seitenansicht eines anderen Details einer Schiene mit einer verschiebbaren Seitenplatte und einer zweiten Hinterschneidung;
- Figur 6: eine Seitenansicht eines Details einer Schiene mit einer teilweise Kunststoff umspritzten Seitenplatte;
- Figur 7: eine Schiene mit zwei Seitenplatten, die an den Enden und in Durchbrüchen der Schiene miteinander und mit der Schiene fest verbunden sind;
- Figur 8: eine Schiene mit einer Öffnung, in die ein Z-förmiges Ende einer Seitenplatte formschlüssig eingreift;
- Figur 8a: eine Schiene mit einer anderen Öffnung, in die ein U-förmiges Ende einer Seitenplatte eingreift und die Schiene formschlüssig umschließt.

### Ausführliche Beschreibung der Zeichnungen

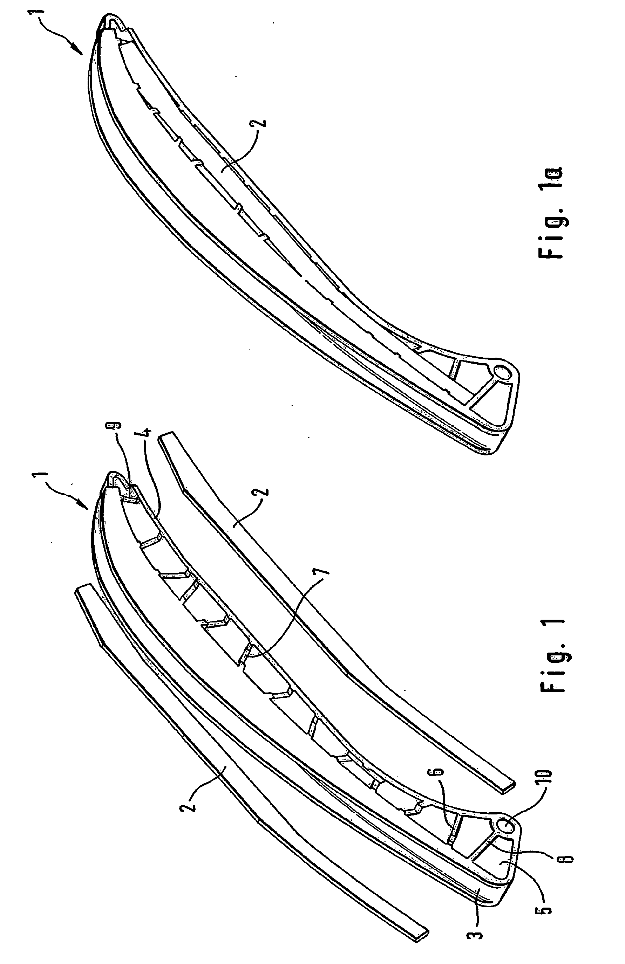

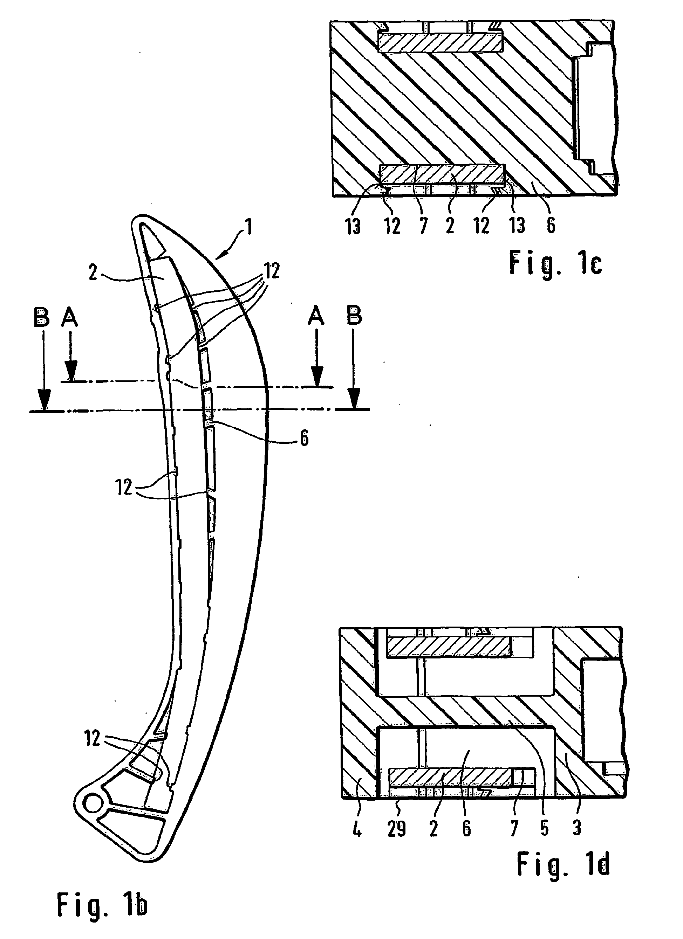

Figur 1 zeigt eine erfindungsgemäße, als Spannschiene ausgebildete Schiene 1 mit zwei Seitenplatten 2 in perspektivischer Explosionsdarstellung. Die Schiene 1, die aus Kunststoff besteht, dient zum Spannen und Führen eines endlosen Zugmittels, insbesondere einer Kette des Steuertriebs eines Verbrennungsmotors. Die Seitenplatten 2 sind aus Stahl gefertigt und dienen der Versteifung und Verstärkung der Schiene 1.

Die Schiene 1 (siehe auch Figur 1d) besitzt einen Doppel-T-Querschnitt mit einem Obergurt 3 und einem Untergurt 4, die durch einen mittigen Steg 5 und durch senkrecht auf beiden Seiten des Stegs 5 stehende Rippen 6 verbunden sind.

In Seitenflächen 29 der Rippen 6 befinden sich Vertiefungen 7, in die die Seitenplatten 2 eingelassen werden. Eine erste Rippe 8, die keine Vertiefung 7 aufweist, dient als Anschlag für die Seitenplatten 2, während die letzte Rippe 9 eine ungehinderte Wärmeausdehnung der Seitenplatten 2 gegenüber der Schiene 1 erlaubt.

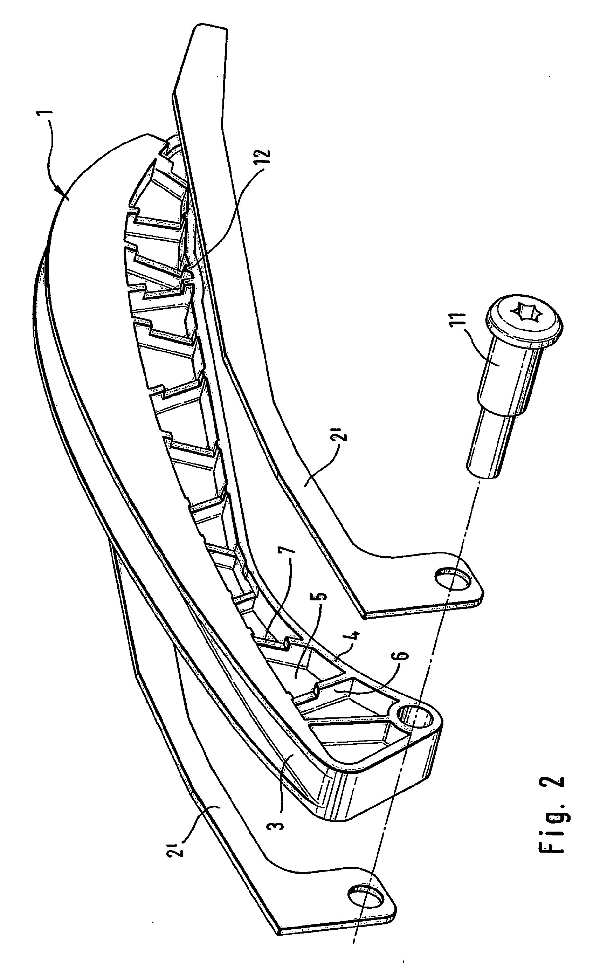

Eine Bohrung 10 dient der Aufnahme eines Fixier- und Lagerelements 11, das als Schraube oder Stift ausgebildet sein kann. (Siehe auch Figur 2). Es dient zugleich zur Befestigung der Schiene 1 an dem Verbrennungsmotor und als deren Schwenklager.

In Figur 1a ist die Schiene 1 mit den seitlich eingelassenen Seitenplatten 2 in perspektivischer Darstellung gezeigt.

In Figur 1b ist eine Seitenansicht der Schiene 1 mit eingebauten Seitenplatten 2 dargestellt. Außerdem ist die Lage einiger sogenannter Schnapphaken 12 gezeigt, die zur Befestigung der Seitenplatten 2 in den Vertiefungen 7 (siehe auch Figur 1) der Rippen 6 dienen. Hinzu kommt die Angabe der Lage der Querschnitte A-A und B-B.

Figur 1c zeigt den vergrößerten Querschnitt A-A der Schiene 1 aus Figur 1b, der durch eine Rippe 6 mit Schnapphaken 12 verläuft. Wegen der symmetrischen Anordnung der Seitenplatten 2 ist die Bezifferung nur einseitig vorgesehen. In den Vertiefungen 7 der auf beiden Seiten des Stegs 5 (siehe Figur 1d) angeordneten Rippen 6 befinden sich die Seitenplatten 2. Diese weisen vorzugsweise kein Seitenspiel auf, um eine optimale Versteifung der Kunststoffschiene durch die stählernen Seitenplatten 2 zu erreichen. Ein Herausfallen der Seitenplatten 2 aus ihren Vertiefungen 7 wird durch die Schnapphaken 12 verhindert. Diese sind einstückig mit der Schiene ausgebildet und ragen über einen Rand 13 der Vertiefungen 7 der Rippen 6 hinaus. Beim Einlegen der Seitenplatten 2 in die Vertiefungen 7 geben die Schnapphaken 12 elastisch nach, um nach dem Einlegen in eine Ausgangs- und Sperrposition zurückzufedern und so ein Herausfallen der Seitenplatten zu verhindern.

In Figur 1d ist der Querschnitt B-B aus Figur 1b dargestellt, der durch einen rippenfreien Bereich der Schiene 1 verläuft. Auch bei diesem Schnitt ist wegen dessen Symmetrie nur eine Seite beziffert. Der Doppel-T-Querschnitt mit dem Obergurt 3, dem Untergurt 4 und dem diese verbindenden Steg 5 sind deutlich zu erkennen. Das gilt auch für eine Rippe 6 mit deren Seitenfläche 29 und deren Vertiefung 7 mit der Seitenplatte 2.

In Figur 2 ist eine perspektivische Explosionsdarstellung der Schiene 1 gemäß Figur 1 dargestellt, mit Obergurt 3, Untergurt 4, Steg 5, Rippen 6, Vertiefung 7 mit modifizierten Seitenplatten 2' dargestellt. Diese werden neben den Schnapphaken 12 zusätzlich durch ein Fixier- und Lagerelement 11 seitlich festgelegt, das auch der Befestigung und Lagerung der Schiene 1 am Verbrennungsmotor dient.

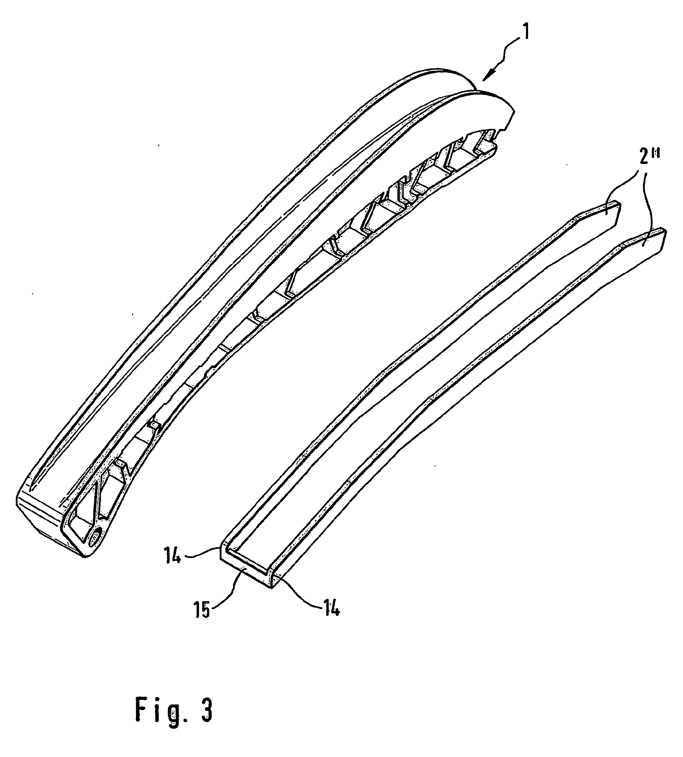

Die Figur 3 zeigt eine Schiene 1 gemäß der Figur 1 und 2 jedoch mit Seitenplatten 2", die an ihrem schraubennahen Ende 14 durch einen Bügel 15 verbunden und als einstückiges Biegeteil ausgebildet sind. Diese Lösung zeichnet sich durch eine kostengünstige Fertigung und Montage aus. Die Verbindung der beiden Seitenplatten 2" kann an beliebiger Stelle und mit wählbarer Anzahl von Bügeln 15 erfolgen.

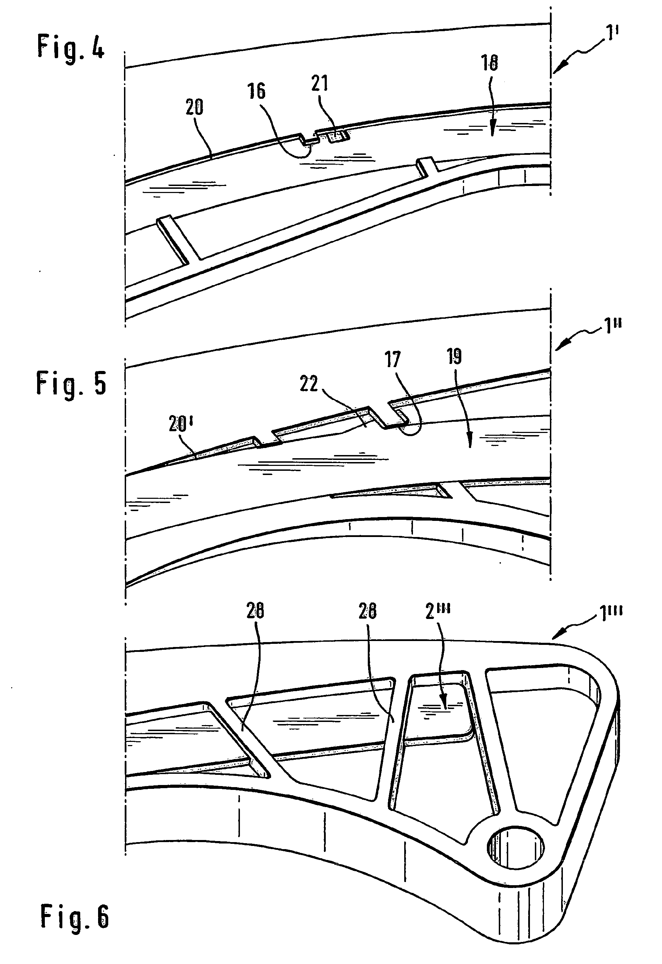

In den Figuren 4 und 5 sind Details von Schienen 1', 1" dargestellt, die erste und/oder zweite Hinterschneidungen 16 und/oder 17 aufweisen. Diese dienen als Befestigungsmittel, hinter die ein passendes Teil einer ersten und/oder zweiten, verschiebbaren Seitenplatte 18 und/oder 19 einschiebbar ist und deren Verriegelung bewirkt.

Die ersten Hinterschneidungen 16 der Schiene 1' ragen wie in Figur 4 dargestellt in die Kontur der ersten verschiebbaren Seitenplatten 18 hinein. Zur Montage der Seitenplatten 18 sind an deren den ersten Hinterschneidungen 16 zugewandten Seitenplattenrand 20 passende Aussparungen 21 für die ersten Hinterschneidungen 16 vorgesehen.

Die in Figur 5 gezeigten zweiten Hinterschneidungen 17 der Schiene 1" befinden sich außerhalb der Kontur der zweiten verschiebbaren Seitenplatten 19. Zu deren Montage weist der den zweiten Hinterschneidungen 17 zugewandte Seitenplattenrand 20' der zweiten verschiebbaren Seitenplatten 19 passende Überstände 22 und den erforderlichen Freiraum zu deren Einschieben in die zweiten Hinterschneidungen 17 auf.

Figur 6 zeigt ein Detail einer Schiene 1"' mit einer Seitenplatte 2"'. Diese wird bei der Fertigung der Schiene 1"' mit Kunststoffstegen 28 umspritzt, die als besonders kostengünstiges Befestigungsmittel für die Seitenplatten 2'" dienen.

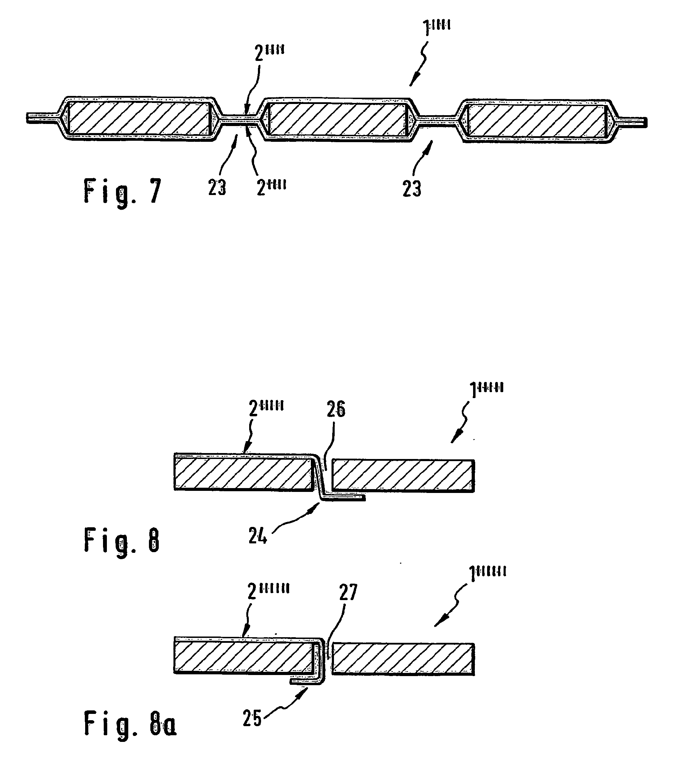

In Figur 7 ist eine Schiene 1"" mit zwei Seitenplatten 2"" schematisch dargestellt. Die Seitenplatten 2"" sind an den Enden der Schiene 1"" und in dazwischenliegenden Durchbrüchen 23 derselben durch Schweißen oder Nieten miteinander verbunden. Die Verbindung ist so ausgelegt, dass die Seitenplatten 2"" auch mit den zwischen den Seitenplatten angeordneten Schienen 1"" in fester Verbindung stehen.

Die schematisch dargestellte Schiene 1""' von Figur 8 weist eine Öffnung 26 auf, in die ein Z-förmiges Ende 24 einer Seitenplatte 2""' formschlüssig eingreift. In vergleichbarer Weise zeigt die Figur 8a eine schematisch dargestellte Schiene 1""" mit einer Öffnung 27, in der ein U-förmiges Ende 25 einer Seitenplaste 2""" die Schiene 1""" formschlüssig umschließt.

Die erfindungsgemäßen Schienen sind aufgrund der Verstärkung durch die Seitenplatten steif, kompakt und kostengünstig.

Die unterschiedlichen Befestigungsmittel für die Seitenplatten können je nach Anwendungsfall kombiniert werden.

### Bezugszeichen

- 1,1' bis 1""": Schiene
- 2, 2' bis 2""": Seitenplatte
- 3: Obergurt
- 4: Untergurt
- 5: Steg
- 6: Rippe
- 7: Vertiefung
- 8: Erste Rippe
- 9: Letzte Rippe
- 10: Bohrung
- 11: Fixier- und Lagerelement
- 12: Schnapphaken
- 13: Rand
- 14: Schraubennahes Ende
- 15: Bügel
- 16: Erste Hinterschneidung
- 17: Zweite Hinterschneidung
- 18: Erste verschiebbare Seitenplatte
- 19: Zweite verschiebbare Seitenplatte
- 20, 20': Seitenplattenrand
- 21: Aussparung
- 22: Überstand
- 23: Durchbruch
- 24: Z-förmiges Ende
- 25: U-förmiges Ende
- 26: Öffnung
- 27: Öffnung
- 28: Kunststoffsteg
- 29: Seitenfläche

## Patentansprüche

1. Zugmitteltrieb mit mindestens einer Schiene (1,1'-1""") zum Spannen oder Führen eines endlosen Zugmittels, insbesondere einer Kette des Steuertriebs eines Verbrennungsmotors, wobei die Schiene (1, 1'-1"""), die aus Kunststoff und Metalleinlagen besteht, einen Doppel-T-Querschnitt mit einem Obergurt (3) und einem Untergurt (4) aufweist, die durch einen mittigen Steg (5) und durch Rippen (6) verbunden sind, die auf beiden Seiten des Stegs (5) senkrecht stehen, **dadurch gekennzeichnet, dass** die Schiene (1,1'-1""") zwei Seitenplatten (2,2'-2""",18,19) aus Stahl aufweist, die formschlüssig in passende Vertiefungen (7) von Seitenflächen (29) der Rippen (6) bevorzugt spielfrei eingelassen und durch formschlüssige Befestigungsmittel lagefixiert sind.

2. Zugmitteltrieb nach Anspruch 1, **dadurch gekennzeichnet, dass** als Befestigungsmittel sogenannte Schnapphaken (12) vorgesehen sind, die einstückig mit der Schiene (1) ausgebildet und an einem Rand (13) der Vertiefungen (7) bei zumindest einigen der Rippen (6) angeordnet sind, wobei die Schnapphaken (12) beim Einlassen der Seitenplatten (2) federnd nachgeben und nach Erreichen der Einbaulage der Seitenplatten (2) in die Ausgangs- bzw. Fixierposition zurückfedern.

3. Zugmitteltrieb nach Anspruch 1, **dadurch gekennzeichnet, dass** ein Fixier- und Lagerelement (11) z. B. eine Schraube oder ein Stift, die zur Befestigung und Lagerung der Schiene (1) am Verbrennungsmotor vorgesehen sind, als zusätzliches Befestigungsmittel für entsprechend gestaltete und mit einer passenden Bohrung versehene Seitenplatten (2') dient.

4. Zugmitteltrieb nach Anspruch 1, **dadurch gekennzeichnet, dass** beide Seitenplatten (2") als zusätzliches Befestigungsmittel zumindest einen Bügel 13 aufweisen, durch den dieselben an einer beliebigen Stelle miteinander verbunden und als einstückiges Biegeteil ausgebildet sind.

5. Zugmitteltrieb nach Anspruch 1, **dadurch gekennzeichnet, dass** als Befestigungsmittel erste und/oder zweite Hinterschneidungen (16 und/oder 17) einer Schiene (1', 1") dienen, hinter die ein entsprechendes Teil einer ersten und/oder zweiten verschiebbaren Seitenplatte (18 und/oder 19) einschiebbar sind.

6. Zugmitteltrieb nach Anspruch 5, **dadurch gekennzeichnet, dass** die ersten Hinterschneidungen (16) der Schiene (1') in die Kontur der ersten verschiebbaren Seitenplatten (18) hineinragen und dass zur Montage dieser Seitenplatten (18) an deren den ersten Hinterschneidungen (16) zugewandten Seitenplattenrand (20) passende Aussparungen (21) zur Montage der ersten Hinterschneidungen (16) vorgesehen sind.

7. Zugmitteltrieb nach Anspruch 5, **dadurch gekennzeichnet, dass** die zweiten Hinterschneidungen (17) der Schiene (1") außerhalb der Kontur der zweiten, verschiebbaren Seitenplatten (19) angeordnet sind und dass zu deren Montage der den zweiten Hinterschneidungen (17) zugewandte Seitenplattenrand (20') passende Überstände (22) und den erforderlichen Freiraum zu deren Einschieben in die zweiten Hinterschneidungen (17) aufweist.

8. Zugmitteltrieb nach Anspruch 1, **dadurch gekennzeichnet, dass** als Befestigungsmittel für Seitenplatten (2"') diese bei der Fertigung einer Schiene (1'") zumindest teilweise mit Kunststoff umspritzt sind.

9. Zugmitteltrieb nach Anspruch 1, **dadurch gekennzeichnet, dass** Seitenplatten (2"") als Befestigungsmittel an den Enden einer Schiene (1"") und/oder in dazwischenliegenden Durchbrüchen (23) derselben durch z. B. Schweißen oder Nieten miteinander und **dadurch** auch mit der Schiene (1"") fest verbunden sind.

10. Zugmitteltrieb nach Anspruch 1, **dadurch gekennzeichnet, dass** Seitenplatten (2""'), (2""") als Befestigungsmittel zumindest ein Z- oder ein U-förmiges Ende (24, 25) aufweisen und dass das Z-förmige Ende (24) in eine Öffnung (26) einer Schiene (1""') formschlüssig eingreift und dass U-förmige Ende (25) in einer Öffnung (27) einer Schiene (1""") dieselbe formschlüssig umschließt.

## Claims

1. Traction drive with at least one rail (1,1'-1'''''') for tensioning or guiding an endless traction means, in particular a chain of the control drive of an internal combustion engine, the rail (1,1'-1'''''') consisting of plastic and metal inserts and having a double-T cross section with an upper boom (3) and with a lower boom (4) which are connected by means of a central web (5) and by means of ribs (6) which stand vertically on both sides of the web (5), **characterized in that** the rail (1,1'-1'''''') has two side plates (2, 2'-2'''''', 18, 19) made from steel which are positively embedded, preferably free of play, into matching depressions (7) of side faces (29) of the ribs (6) and are fixed in position by positive fastening means.

2. Traction drive according to Claim 1, **characterized in that** the fastening means provided are what are known as snap hooks (12) which are formed in one piece with the rail (1) and, in the case of at least some of the ribs (6), are arranged at a margin (13) of the depressions (7), the snap hooks (12) yielding resiliently when the side plates (2) are being embedded and springing back into the initial or fixing position after the installation position of the side plates (2) is reached.

3. Traction drive according to Claim 1, **characterized in that** a fixing and bearing element (11), for example a screw or a pin, which is provided for fastening and mounting the rail (1) on the internal combustion engine, serves as an additional fastening means for correspondingly configured side plates (2') provided with a matching bore.

4. Traction drive according to Claim 1, **characterized in that** the two side plates (2'') have as additional fastening means at least one stirrup piece (13), by which the said side plates are connected to one another at any desired location and are formed as a one-piece bending part.

5. Traction drive according to Claim 1, **characterized in that** first and/or second undercuts (16 and/or 17) of a rail (1',1'') serve as fastening means, behind which undercuts a corresponding part of a first and/or second displaceable side plate (18 and/or 19) can be pushed in.

6. Traction drive according to Claim 5, **characterized in that** the first undercuts (16) of the rail (1') project into the contour of the first displaceable side plates (18), and **in that**, in order to mount these side plates (18), matching clearances (21) for mounting the first undercuts (16) are provided at the side-plate margin (20) of the said side plates which faces the first undercuts (16).

7. Traction drive according to Claim 5, **characterized in that** the second undercuts (17) of the rail (1'') are arranged outside the contour of the second displaceable side plates (19), and **in that**, in order to mount the latter, the side-plate margin (20') facing the second undercuts (17) has matching projections (22) and the necessary free space for pushing these into the second undercuts (17).

8. Traction drive according to Claim 1, **characterized in that**, as fastening means for side plates (2'''), plastic is injection-moulded at least partially around these during the manufacture of a rail (1''').

9. Traction drive according to Claim 1, **characterized in that** side plates (2'''') as fastening means are firmly connected, at the ends of a rail (1'''') and/or in interposed perforations (23) of these, to one another and thereby also to the rail (1''''), for example by welding or riveting.

10. Traction drive according to Claim 1, **characterized in that** side plates (2''''') , (2'''''') as fastening means have at least one Z-shaped or U-shaped end (24, 25), and **in that** the Z-shaped end (24) engages positively into an orifice (26) of a rail (1''''') and **in that** the U-shaped end (25) positively surrounds a rail (1'''''') in an orifice (27) of the latter.

## Revendications

1. Mécanisme à moyen de traction comprenant au moins un rail (1,1'-1'''''') pour tendre ou guider un moyen de traction sans fin, en particulier une chaîne du mécanisme de commande d'un moteur à combustion interne, le rail (1,1'-1'''''') , qui se compose de plastique et de doublures métalliques, présentant une section transversale en forme de double T avec une courroie supérieure (3) et une courroie inférieure (4), qui sont connectées par une âme centrale (5) et par des nervures (6) qui sont disposées perpendiculairement des deux côtés de l'âme (5), **caractérisé en ce que** le rail (1,1'-1'''''') présente deux plaques latérales (2, 2'-2'''''', 18, 19) en acier, qui sont incorporées par engagement par correspondance géométrique dans des renfoncements adaptés (7) de surfaces latérales (29) des nervures (6), de préférence sans jeu, et qui sont fixées en position par des moyens de fixation par engagement par correspondance géométrique.

2. Mécanisme à moyen de traction selon la revendication 1, **caractérisé en ce que** l'on prévoit comme moyens de fixation ce qu'on appelle des crochets d'encliquetage (12), qui sont réalisés d'une seule pièce avec le rail (1) et qui sont disposés sur un bord (13) des renfoncements (7) dans le cas d'au moins quelques-unes des nervures (6), les crochets d'encliquetage (12) cédant élastiquement lors de l'insertion des plaques latérales (2) et revenant élastiquement dans la position de départ ou de fixation une fois que les plaques latérales (2) ont atteint leur position de montage.

3. Mécanisme à moyen de traction selon la revendication 1, **caractérisé en ce qu'**un élément de fixation et de support (11), par exemple une vis ou une goupille, qui sont prévus pour la fixation et le support du rail (1) sur le moteur à combustion interne, sert de moyen de fixation supplémentaire pour des plaques latérales (2') de configuration correspondante et pourvues d'un alésage adapté.

4. Mécanisme à moyen de traction selon la revendication 1, **caractérisé en ce que** les deux plaques latérales (2") présentent, en tant que moyen de fixation supplémentaire, au moins un arceau (13) qui permet de les connecter l'une à l'autre à un endroit quelconque et de les réaliser sous forme de pièce cintrée d'une seule pièce.

5. Mécanisme à moyen de traction selon la revendication 1, **caractérisé en ce que** des premières et/ou deuxièmes contre-dépouilles (16 et/ou 17) d'un rail (1',1'') servent de moyens de fixation, derrière lesquelles une partie correspondante d'une première et/ou deuxième plaque latérale déplaçable (18 et/ou 19) peut être insérée.

6. Mécanisme à moyen de traction selon la revendication 5, **caractérisé en ce que** les premières contre-dépouilles (16) du rail (1') pénètrent dans le contour des premières plaques latérales déplaçables (18) et **en ce que** pour le montage de ces plaques latérales (18) sur leur bord de plaque latérale (20) tourné vers les premières contre-dépouilles (16), on prévoit des évidements adaptés (21) pour le montage des premières contre-dépouilles (16).

7. Mécanisme à moyen de traction selon la revendication 5, **caractérisé en ce que** les deuxièmes contre-dépouilles (17) du rail (1") sont disposées en dehors du contour des deuxièmes plaques latérales déplaçables (19), et **en ce que** pour leur montage, le bord de plaque latérale (20') tourné vers les deuxièmes contre-dépouilles (17) présente des rebords adaptés (22) et l'espace requis pour leur enfoncement dans les deuxièmes contre-dépouilles (17).

8. Mécanisme à moyen de traction selon la revendication 1, **caractérisé en ce que** pour les moyens de fixation pour les plaques latérales (2'''), celles-ci sont surmoulées lors de la fabrication d'un rail (1"') au moins partiellement avec du plastique.

9. Mécanisme à moyen de traction selon la revendication 1, **caractérisé en ce que** les plaques latérales (2"") sont connectées fixement l'une à l'autre en tant que moyens de fixation aux extrémités d'un rail (1"") et/ou dans des orifices intermédiaires (23) de celui-ci, par exemple par soudage ou rivetage et sont de ce fait également connectées fixement au rail (1'''').

10. Mécanisme à moyen de traction selon la revendication 1, **caractérisé en ce que** les plaques latérales (2""') , (2""") en tant que moyens de fixation présentent au moins une extrémité en forme de Z ou une extrémité en forme de U (24, 25), et **en ce que** l'extrémité en forme de Z (24) vient en prise par engagement par correspondance géométrique dans une ouverture (26) d'un rail (1""') et **en ce que** l'extrémité en forme de U (25) entoure le rail (1""") par engagement par correspondance géométrique dans une ouverture (27) de celui-ci.
